# EUROPÄISCHE PATENTSCHRIFT

(11) **EP 3 502 523 B1**
(45) Veröffentlichungstag und Bekanntmachung des Hinweises auf die Patenterteilung: **17.02.2021**
(21) Anmeldenummer: 18000982.1
(22) Anmeldetag: 19.12.2018
(51) Int. Cl.: F16J 15/3244

(54) **RADIALWELLENDICHTUNG**
OIL SEAL UNIT
JOINT RADIAL D'ÉTANCHÉITÉ D'ARBRE

(30) Priorität: 22.12.2017 DE 102017012166
(43) Veröffentlichungstag der Anmeldung: 26.06.2019
(73) Patentinhaber: KACO GmbH + Co. KG, 74912 Kirchardt (DE)
(72) Erfinder: Wunder, Wilhelm, 71717 Beilstein (DE); Rempel, Konstantin, 32339 Espelkamp (DE)
(74) Vertreter: Kohl, Karl-Heinz

(56) Entgegenhaltungen:
- DE-A1-102017 204 204
- US-A1- 2014 312 571

## Beschreibung

Die Erfindung betrifft eine Radialwellendichtung nach dem Oberbegriff des Anspruches 1.

Es sind Radialwellendichtungen in Form von Radialwellendichtringen bekannt (DE 10 2011 076 326 A1, US-A-2014/0312571), die zur Abdichtung von drehenden Wellen eingesetzt werden. Die Dichtlippe des Radialwellendichtringes liegt unter Radialkraft mit dem ersten umlaufenden Ring an der Welle an und dichtet gegen die Mediumsseite ab. Sollte Medium unter den ersten Ring hindurchgetreten sein, wird es durch die Rückförderelemente wieder zurück in die Mediumsseite gefördert. Die Rückförderelemente sind durch abwechselnd entgegengesetzt schräg zur Umfangsrichtung der Dichtlippe sich erstreckende Nuten gebildet, die in der Dichtlippenunterseite angeordnet sind und in denen das hindurchgetretene Medium je nach Drehrichtung der Welle zurück zum ersten Ring und unter ihm hindurch gefördert wird. Mit dem zweiten Ring erfolgt eine Abdichtung gegen die Luftseite. Solche Radialwellendichtringe bereiten Probleme, wenn die Welle mit hohen Drehzahlen dreht. Hierunter sind Drehzahlen von wenigstens 10.000 U/min zu verstehen. Die schräg angeordneten Nuten als Rückförderelemente sind bei solchen hohen Drehzahlen für eine zuverlässige Rückförderung des unter den ersten Ring hindurchgetretenen Mediums nicht gut geeignet.

Der Erfindung liegt die Aufgabe zugrunde, die gattungsgemäße Radialwellendichtung so auszubilden, dass sie für hohe Drehzahlen der abzudichtenden Welle in beiden Drehrichtungen geeignet ist.

Diese Aufgabe wird bei der gattungsgemäßen Radialwellendichtung erfindungsgemäß mit den kennzeichnenden Merkmalen des Anspruches 1 gelöst.

Bei der erfindungsgemäßen Radialwellendichtung ist der erste umlaufende Ring als Erhöhung ausgebildet und mit über seinen Umfang verteilt angeordneten Einwölbungen versehen, die ebenfalls als Erhöhungen ausgebildet sind. Sie erstrecken sich in Richtung auf den zweiten Ring und sind im Bereich zwischen benachbarten Rückförderelementen angeordnet. Die Einwölbungen erstrecken sich vom ersten Ring aus in Richtung auf die Luftseite der Radialwellendichtung. Die Einwölbungen sorgen dafür, dass unter dem ersten Ring hindurchgetretenes Medium wieder in Richtung auf die Mediumsseite gefördert wird. Der erste Ring mit den Einwölbungen verringert die Störung der Strömungsrichtung des abzudichtenden Mediums. Außerdem wird durch diese Ausbildung des ersten Ringes die Verlustströmung verringert. Die Einwölbungen führen außerdem dazu, dass die Kontaktfläche zwischen dem ersten Ring und der Welle im Bereich der berechneten Verlustströmung vergrößert wird. Dadurch wird es dem abzudichtenden Medium erschwert, sich über die Rückförderelemente in Richtung auf die Luftseite hin zu bewegen. Die erfindungsgemäße Radialwellendichtung ist insbesondere für solche Einsatzfälle geeignet, bei denen auch bei hohen Drehzahlen der Welle das abzudichtende, eventuell unter dem ersten Ring hindurchgetretene Medium wieder zurück auf die Mediumsseite gefördert wird. Unter hohen Drehzahlen ist hierbei zu verstehen, dass die abzudichtende Welle eine Drehzahl von mindestens etwa 10.000 U/min aufweist. Mit der erfindungsgemäßen Radialwellendichtung können auch Wellen in beiden Drehrichtungen zuverlässig abgedichtet werden, die beispielsweise Drehzahlen im Bereich bis zu 50.000 U/min haben. Solche Anforderungen treten insbesondere im Bereich der E-Mobilität im Automobilbereich auf.

Bei kleineren Wellendurchmessern, die kleiner etwa 30 mm, vorzugsweise kleiner etwa 20 mm, sind, können Drehzahlen bis etwa 100.000 U/min auftreten. Auch dann kann die erfindungsgemäße Radialwellendichtung die Wellen einwandfrei abdichten.

Vorteilhaft sind die Rückförderelemente symmetrisch zu ihrer in einer Axialebene der Radialwellendichtung liegenden Mittelebene ausgebildet. Dadurch ist gewährleistet, dass in beiden Drehrichtungen der Welle das unter den ersten Ring hindurchgetretene Medium zuverlässig wieder zurück auf die Mediumsseite gefördert wird.

Vorteilhaft schließen die Einwölbungen annähernd tangential an den ersten Ring an. Die Rückförderung des Mediums wird dadurch in vorteilhafter Weise begünstigt.

Damit über den Umfang der Dichtlippe unabhängig von der Drehrichtung der Welle das unter den ersten Ring hindurchgetretene Medium zuverlässig wieder auf die Mediumsseite zurückgefördert wird, ist es vorteilhaft, wenn die Rückförderelemente in Umfangsrichtung der Dichtlippe schräg verlaufen.

Vorteilhaft ist es, wenn die Rückförderelemente in sich gerade ausgebildet sind.

Es ist auch möglich, die Rückförderelemente gekrümmt auszubilden, z.B. sichelförmig. Dabei können die Rückförderelemente in Richtung auf den ersten Ring gekrümmt verlaufen und sich an ihn anschmiegen. Der Übergang der Rückförderelemente an den ersten Ring erfolgt in diesem Falle etwa tangential. Auch bei einer solchen Gestaltung der Rückförderelemente ist eine Rückförderung von Medium, das durch den ersten Ring hindurchgetreten ist, wieder zurück auf die Mediumsseite bei hohen Drehzahlen der Welle zuverlässig möglich.

Bei einer vorteilhaften Ausführungsform sind in Umfangsrichtung der Dichtlippe benachbarte Rückförderelemente entgegengesetzt schräg zueinander angeordnet. Dadurch wird über den Umfang der Dichtlippe bei beiden Drehrichtungen der Welle eine einwandfreie Rückförderung von eventuell unter den ersten Ring hindurchgetretenem Medium erreicht.

Eine Rückförderung dieses Mediums auf die Mediumsseite ist besonders dann gewährleistet, wenn die Rückförderelemente an den ersten Ring anschließen und vorzugsweise einstückig mit ihm ausgebildet sind.

Damit das Medium durch die Rückförderelemente und die Einwölbungen zuverlässig auf die Mediumsseite zurückgefördert wird, schließen in vorteilhafter Weise die Rückförderelemente und die Einwölbung mit ihren Enden etwa auf gleicher Höhe an den ersten Ring an.

Die Rückförderelemente sind vorteilhaft so angeordnet, dass sie mit dem benachbarten Bereich des ersten Ringes einen spitzen Winkel einschließen.

Hierbei bilden die Rückförderelemente zusammen mit diesen benachbarten Bereichen des ersten Ringes jeweils einen Druckraum. Bei der Rückförderung gelangt das Medium in diesen Druckraum, der sich infolge der spitzwinkligen Lage der Rückförderelemente zum ersten Ring in Strömungsrichtung des zurückzufördernden Mediums verjüngt. Dadurch baut sich im Druckraum ein solcher Druck auf, dass der erste Ring vom zurückzufördernden Medium geringfügig überströmt wird und sich ein Rückfördermechanismus an einer definierten Stelle einstellt.

Bei einer vorteilhaften Ausführungsform haben die Rückförderelemente Abstand vom zweiten Ring. Dadurch kann zuverlässig verhindert werden, dass unter den ersten Ring hindurchgetretenes Medium an die Luftseite gelangt.

Eine einfache Ausbildung ergibt sich, wenn die über den Umfang der Dichtlippe vorgesehenen Rückförderelemente gleich lang sind.

Es ist aber auch möglich, dass die Rückförderelemente unterschiedlich lang sind. Dies kann bedeuten, dass alle Rückförderelemente ungleich lang sind. Je nach Einsatzfall kann hierunter aber auch verstanden werden, dass beispielsweise nur eines dieser Rückförderelemente eine andere Länge aufweist als die übrigen anderen Rückförderelemente.

Eine sichere Abdichtung gegen die Luftseite wird in vorteilhafter Weise erreicht, wenn an der Dichtlippe mehrere zweite Ringe vorgesehen sind, die koaxial zueinander und zum ersten Ring liegen.

Vorteilhaft sind die zweiten Ringe gleich ausgebildet.

Um bei der hohen Drehzahl der Welle den Verschleiß gering zu halten, weist in vorteilhafter Weise der zweite Ring im Axialschnitt eine gekrümmte Außenseite auf.

Hierbei ist vorteilhaft der zweite Ring so ausgebildet, dass er im Axialschnitt etwa halbkreisförmigen Querschnitt aufweist.

Bei einer einfachen Ausführungsform sind die zweiten Ringe mit gleichem Abstand hintereinander angeordnet.

Bei einer besonders vorteilhaften Ausbildung weist der dem ersten Ring benachbarte zweite Ring über seinen Umfang verteilt angeordnete Auswölbungen auf, die sich in Richtung auf den ersten Ring erstrecken. Durch die Auswölbungen werden eventuelle Verlustströmungen gezielt und aktiv wieder den Rückförderelementen zugeführt.

Damit über den Umfang der Dichtlippe diese Rückführung sichergestellt ist, sind in vorteilhafter Weise die Auswölbungen und die Einwölbungen in Umfangsrichtung der Dichtlippe abwechselnd angeordnet.

Die Auswölbungen können so ausgebildet sein, dass ihre dem ersten Ring zugewandte Seitenwand konkav gekrümmt verläuft. Vorteilhaft sind hierbei die Auswölbungen symmetrisch in Bezug auf ihre Mittelebene ausgebildet, in der Projektion auf die Zeichnungsebene gesehen. Das zurückzufördernde Medium wird längs der gekrümmten Seitenfläche zuverlässig den Rückförderelementen zugeführt.

Die freien Enden der Rückförderelemente haben vorteilhaft geringen Abstand von den Auswölbungen. Zwischen den Rückförderelementen und der entsprechenden Seitenwand der Auswölbungen werden dadurch kleine Rückführspalte gebildet, über die das Medium zu den Rückförderelementen geleitet werden kann.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Ansicht eine erfindungsgemäße Radialwellendichtung,
- Fig. 2: einen Schnitt längs der Linie C-C in Fig. 1,
- Fig. 3: in vergrößerter Darstellung den Ausschnitt D in Fig. 2,
- Fig. 4: in vergrößerter Darstellung den Ausschnitt M in Fig. 2,
- Fig. 4a: in vergrößerter Darstellung den Verlauf der Rückförderung und der Verlustströmung,
- Fig. 5: in vergrößerter Darstellung einen Schnitt längs der Linie N-N in Fig. 4,
- Fig. 6: in vergrößerter Darstellung den Ausschnitt H in Fig. 2
- Fig. 7: in vergrößerter Darstellung den Ausschnitt F in Fig. 2,
- Fig. 8: einen Schnitt längs der Linie J-J in Fig. 7.

Die nachfolgend beschriebene Radialwellendichtung ist als Radialwellendichtring ausgebildet. Der Radialwellendichtring wird insbesondere für Wellen vorgesehen, an die im Einsatz extreme Anforderungen in Bezug auf hohe Drehzahlen, hohe Umfangsgeschwindigkeiten und wechselnde Drehrichtungen gestellt werden. Solche Anforderungen werden insbesondere im Bereich der E-Mobilität von der Automobilindustrie gestellt. Hier werden Elektromotoren eingesetzt, die Drehzahlen von mindestens 10.000 U/min haben. Für zukünftige Aggregate werden bereits Drehzahlen im Bereich von 20.000 bis 30.000 U/min angestrebt. Sind die Wellen solcher Elektromotoren Antriebswellen von Getrieben, so werden die hohen Drehzahlen nicht nur bei der Vorwärtsfahrt, sondern auch bei der Rückwärtsfahrt gefordert. Der im Folgenden beschriebene Radialwellendichtring erfüllt diese Anforderungen.

Der Radialwellendichtring hat ein ringförmiges Gehäuse 1 mit L-förmigem Querschnitt. Das Gehäuse hat einen zylindrischen Mantel 2, der an einem Ende in einen radial nach innen gerichteten Boden 3 übergeht. Er ist zentrisch mit einer Durchtrittsöffnung 4 für die abzudichtende Welle versehen. Das Gehäuse 1 kann aus metallischem Werkstoff, aber auch aus hartem Kunststoff bestehen.

Der Boden 3 ist an seiner Außenseite mit einer Abdeckung 5 versehen, die auch den Mantel 2 an seiner radialen Außenseite bedeckt. Der den Mantel 2 bedeckende Teil der Abdeckung 5 bildet eine statische Abdichtung des Radialwellendichtringes in dessen Einbaulage. Vorteilhaft ist der den Mantel 2 bedeckende Teil der Abdeckung 5 mit einer Profilierung 6 versehen, die über den Mantel 2 übersteht und beim Einsetzen des Radialwellendichtringes in einen Aufnahmeraum elastisch zusammengedrückt wird. Dadurch wird eine einwandfreie statische Abdichtung sichergestellt. Der Mantel 2 des Gehäuses 1 sitzt mit Presssitz im Einbauraum für den Radialwellendichtring.

Die Abdeckung 5 umgibt auch den Rand 7 der Durchtrittsöffnung 4 und erstreckt sich über einen Teil der Innenseite 8 des Gehäusebodens 3. Außerdem bedeckt die Abdeckung 5 vorteilhaft auch die Stirnseite 9 des Mantels 2.

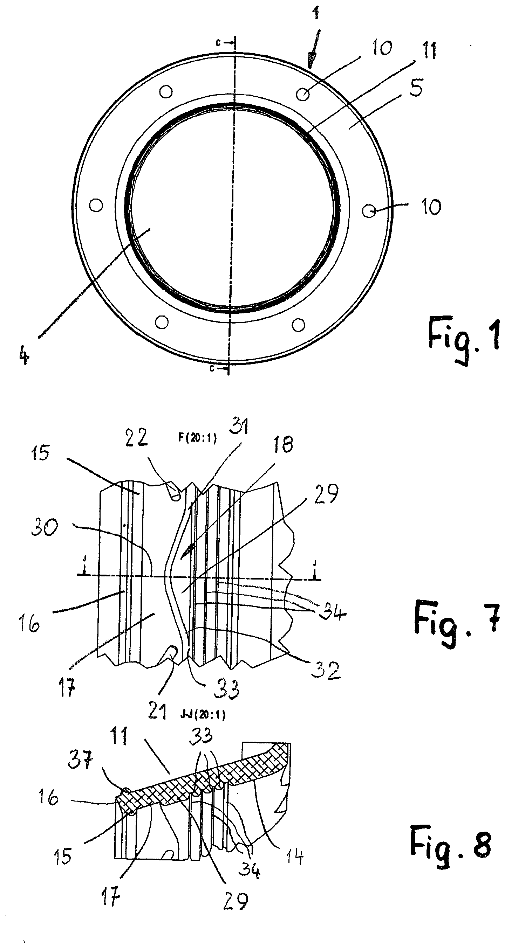

Die Abdeckung 5 ist in geeigneter Weise fest mit dem Gehäuse 1 verbunden, beispielsweise mit einem entsprechenden Bindesystem. So kann die Verbindung mittels eines Klebemittels erfolgen. Bei einem elastomeren Werkstoff kann die Abdeckung 5 an das Gehäuse 1 anvulkanisiert werden. Vorteilhaft ist es, wenn die Abdeckung 5 auf der Außenseite des Gehäusebodens 3 zusätzlich noch formschlüssig mit dem Boden 3 verbunden ist. Er weist an seiner Außenseite über seinen Umfang verteilt angeordnete Aussparungen 10 auf, die vorteilhaft längs eines Ringes verteilt über den Umfang des Gehäusebodens 3 vorhanden sind (Fig. 1).

Der Radialwellendichtring ist mit einer Dichtlippe 11 versehen, die in der Einbaulage unter elastischer Verformung auf der abzudichtenden Welle aufliegt. Die Dichtlippe 11 ist vorteilhaft einstückig mit der Abdeckung 5 ausgebildet. Grundsätzlich aber ist es möglich, die Abdeckung 5 und die Dichtlippe 11 als getrennte Teile vorzusehen. Dies hat den Vorteil, dass dann die Dichtlippe 11 aus einem anderen Material hergestellt werden kann als die Abdeckung 5.

Der Radialwellendichtring kann mit einer Schutzlippe versehen sein, die ebenfalls vorteilhaft einstückig mit der Abdeckung 5 und damit auch mit der Dichtlippe 11 ausgebildet ist. Die Schutzlippe befindet sich auf der Luftseite 13 des Radialwellendichtringes und verhindert einen Zutritt von Schmutzteilchen und dergleichen an die Dichtlippe 11.

In der Einbaulage liegt die Dichtlippe 11 unter elastischer Verformung flächig auf der rotierenden Welle auf. Um die Reibung und damit den Verschleiß gering zu halten, ist die Flächenpressung bzw. die spezifische Radialkraft, unter der die Dichtlippe 11 an der Welle anliegt, sehr gering und liegt beispielsweise in der Größenordnung von etwa 0,01 bis 0,1 N/mm.

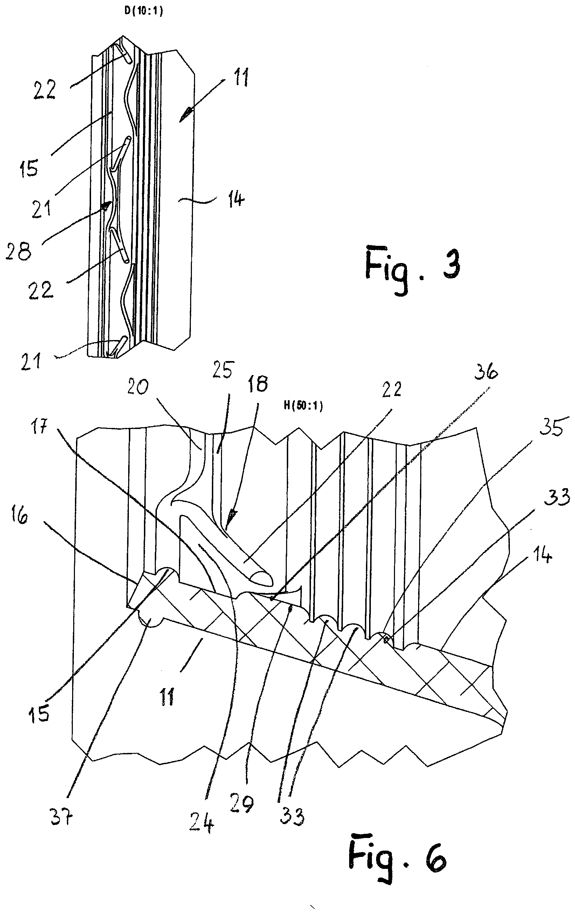

Die der abzudichtenden Welle zugewandte Innenseite 14 der Dichtlippe 11 ist mit einer Struktur versehen, die anhand der Fig. 3 bis 8 im Einzelnen erläutert wird.

Am freien Rand ist an der Innenseite 14 der Dichtlippe 11 ein umlaufender Rand 15 vorgesehen, der durch eine im Axialschnitt etwa halbkreisförmige Erhöhung an der Innenseite 14 gebildet wird. Der Ring 15 hat geringen Abstand von der Stirnseite 16 der Dichtlippe 11 (Fig. 6 und 8).

An den umlaufenden Ring 15 schließt an der von der Stirnseite 16 der Dichtlippe 11 abgewandten Seite eine Mantelfläche 17 an, in der sich Rückfördereinheiten 18 befinden, die dafür sorgen, dass von der Mediumsseite 19 des Radialwellendichtringes unter die Dichtlippe 11 gelangendes Medium, in der Regel Öl, wieder zurück auf die Mediumsseite 19 gefördert wird.

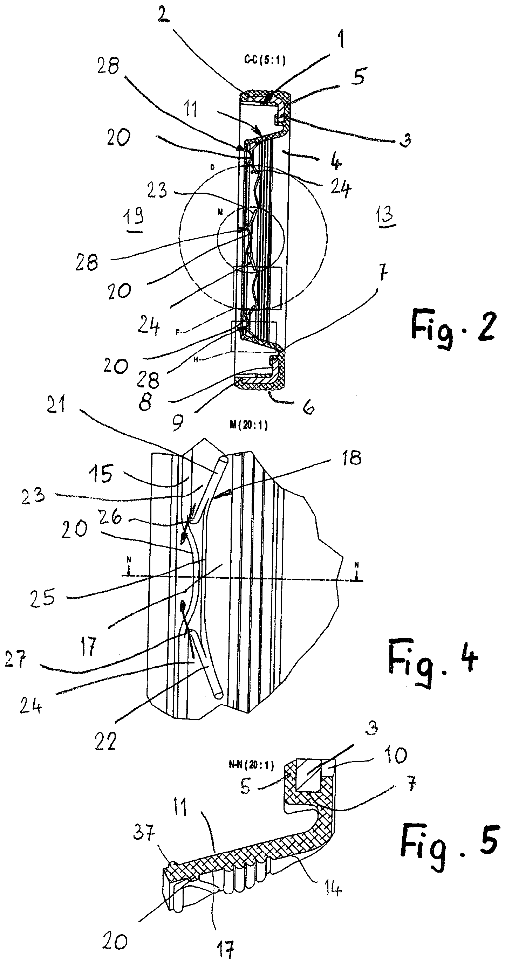

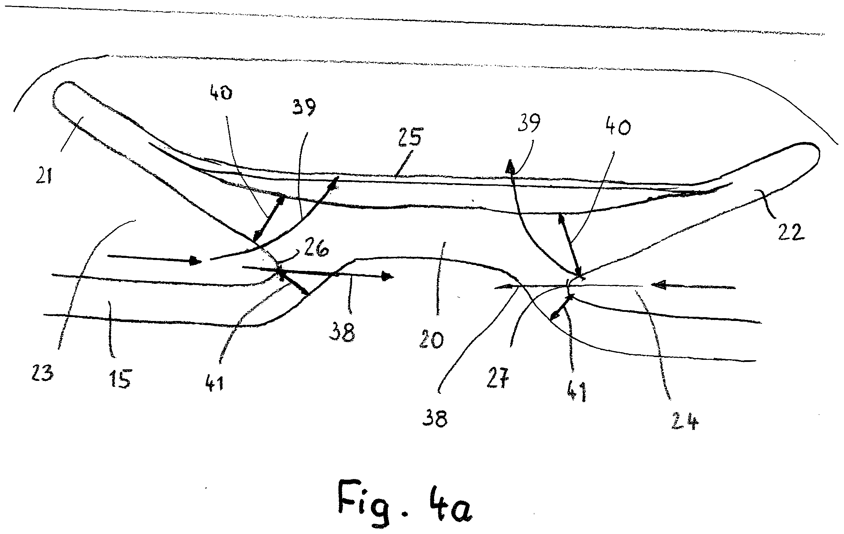

Wie aus den Fig. 2 und 4 hervorgeht, weist der Ring 15 mit Abstand von-einander liegende sichelförmige Einwölbungen bildende Abschnitte 20 auf, die in Richtung auf die Luftseite 13 gekrümmt verlaufen. Die Abschnitte 20 sind jeweils spiegelsymmetrisch zur zugehörigen Axialebene ausgebildet, wie aus Fig. 4 hervorgeht. Die Abschnitte 20 sind einstückig mit dem Ring 15 ausgebildet, haben jedoch kleinere Breite als der Ring 15. Im Ausführungsbeispiel sind die Abschnitte 20 etwa halb so breit wie der Ring 15 (Fig. 4).

Die Abschnitte 20 können über ihre gesamte Umfangslänge stetig gekrümmt sein. Es ist aber durchaus möglich, dass die Abschnitte 20 in halber Länge einen geraden Mittelabschnitt aufweisen. Je nach Ausbildung der bogenförmigen Abschnitte 20 kann Einfluss auf die Rückförderqualität der Rückfördereinheiten 18 genommen werden.

In dem Bereich, in dem die beiden Enden der Abschnitte 20 in den Ring 15 übergehen, erstrecken sich entgegengesetzt zueinander verlaufende Rückförderelemente 21, 22, die in Umfangsrichtung der Dichtlippe 11 winklig verlaufen. Die Abschnitte 20 und die Rückförderelemente 21, 22 bilden die Rückfördereinheiten 18.

Die Abschnitte 20 und die Rückförderelemente 21, 22 sind wie der Rand 15 durch Erhöhungen gebildet, die auf der Innenseite 14 über die Mantelfläche 17 vorstehen. Die Rückförderelemente 21, 22 liegen spitzwinklig zu den benachbarten Bereichen des Randes 15, mit denen sie in Draufsicht gemäß Fig. 4 V-förmige Druckräume 23, 24 begrenzen. Sie verjüngen sich in Umfangsrichtung in Richtung auf den bogenförmigen Abschnitt 20, der sich zwischen den beiden Druckräumen 23, 24 erstreckt. Die Rückförderelemente 21, 22 gehen bogenförmig gekrümmt in den mediumsseitigen Ring 15 über.

Wie Fig. 4 zeigt, sind die Rückförderelemente 21, 22 durch eine schmale Rippe 25 miteinander verbunden. Die Rippe 25 erstreckt sich in Umfangsrichtung und parallel zum mediumsseitigen Ring 15. Vorteilhaft ist die Rippe 25 einstückig mit den Rückförderelementen 21, 22 ausgebildet.

Der bogenförmige Abschnitt 20 ist so angeordnet, dass er in halber Länge den kleinsten Abstand von der Rippe 25 hat.

Über den Umfang der Dichtlippe 11 sind die bogenförmigen Abschnitte 20 gleichmäßig verteilt angeordnet (Fig. 2). An die Abschnitte 20 schließen in der beschriebenen Weise jeweils die Rückförderelemente 21, 22 an, die mit den benachbarten Bereichen des mediumsseitigen Ringes 15 die Druckräume 23, 24 begrenzen. Die abgerundeten Spitzen 26, 27 der Druckräume 23, 24 an beiden Enden des Abschnittes 20 sind gegeneinander gerichtet.

Die Rückfördereinheit 18 und die Rippe 25 bilden eine Rückfördereinrichtung 28. Dementsprechend sind über den Umfang der Dichtlippe 11 mit Abstand hintereinander mehrere solcher Rückfördereinrichtungen 28 vorgesehen.

Im Bereich zwischen benachbarten Rückfördereinrichtungen 28 befindet sich eine erhabene Leitrippe 29, die an der Innenseite 14 der Dichtlippe 11 vorgesehen ist und vorteilhaft gleiche Höhe wie der mediumsseitige Ring 15 hat. Die Leitrippe 29 erstreckt sich in Umfangsrichtung der Dichtlippe 11 und verbreitert sich von ihren beiden Enden aus. Vorteilhaft ist die Leitrippe 29 in Bezug auf ihre Quermittelebene 30 spiegelsymmetrisch ausgebildet (Fig. 7).

Die Leitrippe 29 weist über ihre Länge Abstand vom mediumsseitigen Ring 15 auf. Entsprechend der Formgestaltung der Leitrippe 29 ist ihr Abstand zum Ring 15 in halber Länge am geringsten, während er im Bereich der beiden in Umfangsrichtung liegenden Enden am größten ist.

Die beiden Enden 31, 32 liegen etwa in Höhe der freien Enden der Rückförderelemente 21, 22 der benachbarten Fördereinheiten 18. Die freien Enden der Rückförderelemente 21, 22 haben geringen Abstand von den Enden 31, 32 der Leitrippe 29.

Zwischen den benachbarten Rückfördereinrichtungen 28 ist jeweils eine solche Leitrippe 29 angeordnet. Sie wird jeweils durch eine Auswölbung eines Ringes 33 gebildet, der an der Innenseite 14 der Dichtlippe 11 vorgesehen ist und koaxial zum mediumsseitigen Ring 15 verläuft. Zwischen den Ringen 15 und 33 befinden sich die Rückfördereinrichtungen 28.

Vorteilhaft sind mehrere solcher Ringe 33 vorgesehen, die jeweils koaxial zueinander liegen und vorteilhaft geringen axialen Abstand voneinander haben. Zwischen den Ringen 33 werden darum ringförmige Zwischenräume 34 gebildet, die koaxial zueinander sowie zum mediumsseitigen Ring 15 liegen und vorteilhaft gleiche Breite haben. Von diesen Ringen 33 ist nur der benachbart zum mediumsseitigen Ring 15 liegende Ring 33 mit den Leitrippen 29 versehen.

Die Ringe 33, die vorteilhaft eine gekrümmte Außenseite 35 haben, gewährleisten im statischen Zustand, wenn die abzudichtende Welle nicht dreht, die Dichtfunktion.

Die Ringe 15, 33, die Rückfördereinheiten 18 und die Leitrippen 29 haben bevorzugt gleiche Höhe (Fig. 6). Dadurch ist sichergestellt, dass die Mediumsseite 19 durch den Ring 15 einwandfrei abgedichtet werden kann. Dennoch unter den Ring 15 hindurchgetretenes Medium wird von den Rückfördereinrichtungen 28 und den Leitrippen 29 zuverlässig zurückgefördert. Die Ringe 33, die in der Einbaulage dichtend auf der Welle aufliegen, verhindern, dass von der Luftseite 13 aus Luft angesaugt wird.

Im Unterschied zu den Ringen 15, 33 hat die Leitrippe 29 eine ebene Stirnseite 36.

Da die Rückfördereinrichtungen 28 und die Leitrippen 29, in der Projektion auf die Zeichnungsebene gesehen (Fig. 4 und 7), symmetrisch zur jeweiligen Mittelebene 30 ausgebildet sind, wirken sie in beiden Drehrichtungen optimal. Das unter die Dichtlippe 11 gelangte Medium wird somit unabhängig von der Drehrichtung der Welle zuverlässig zur Mediumsseite 19 zurückgefördert.

Die Abschnitte 20 bis 22 sowie die Rippe 25 haben über ihre Länge jeweils etwa konstante axiale Breite (Fig. 4). Dadurch ergibt sich eine gleichmäßige Rückförderung des Mediums in beiden Drehrichtungen der Welle.

Die Höhe der Abschnitte 20 kann konstant sein. Es ist darüber hinaus möglich, diese Abschnitte 20 so auszubilden, dass ihre Höhe von beiden Enden aus stetig zunimmt, so dass die Abschnitte 20 in halber Länge ihre größte Höhe haben.

Der mediumsseitige Ring 15 hat geringen Abstand von der Stirnseite 16 der Dichtlippe 11. In der Einbaulage liegt die Stirnseite 16 etwa rechtwinklig zur Oberseite der Welle. Etwa in Höhe des mediumsseitigen Ringes 15 ist auf der Oberseite der Dichtlippe 11 ein umlaufender vorstehender Ring 37 vorgesehen. Er hat vorteilhaft eine gekrümmte Oberseite. Im Axialschnitt (Fig. 6) ist der Ring 37 etwa halbkreisförmig ausgebildet. Der Ring 37 kann zu einer Festigkeitserhöhung der Dichtlippe 11 beitragen.

Im dargestellten und beschriebenen Ausführungsbeispiel sind die Rückfördereinheiten 18 sowie die Leitrippe 29 symmetrisch zur Quermittelebene 30 ausgebildet. Es ist grundsätzlich aber auch möglich, die Rückfördereinrichtungen 28 abweichend vom dargestellten bevorzugten Ausführungsbeispiel auch asymmetrisch auszubilden. Eine solche Gestaltung bietet sich an, wenn die abzudichtende Welle im Einsatz eine Hauptdrehrichtung aufweist. Dann können die Rückfördereinrichtungen 28 und die Leitrippen 29 so gestaltet sein, dass in dieser Hauptdrehrichtung eine optimale Rückförderwirkung des unter die Dichtlippe 11 gelangenden Mediums erreicht wird. Wenn die Welle dann in eine andere Richtung dreht, reicht in diesem Falle die Rückförderwirkung der asymmetrisch ausgebildeten Rückfördereinrichtungen 28 und Leitrippen 29 aus.

Um beispielsweise im Betrieb bei sehr hoher Drehzahl möglicherweise auftretende Geräusche zu minimieren, kann die Länge der Rückförderelemente 21, 22 auch variiert werden. Der Radialwellendichtring zeichnet sich daher im Einsatz durch eine hervorragende Geräuscharmut aus. Der Radialwellendichtring ist zudem konstruktiv einfach im Aufbau und kann kostengünstig gefertigt werden.

Es ist weiter möglich, die Rückfördereinrichtungen 28 in Umfangsrichtung der Dichtlippe 11 so anzuordnen, dass sie unmittelbar aneinander anschließen und nicht, wie im dargestellten Ausführungsbeispiel, geringen umfangsseitigen Abstand voneinander haben.

In den Druckräumen 23, 24 entsteht beim Einsatz des Radialwellendichtringes durch das unter den Ring 15 hindurchgetretene abzudichtende Medium eine hydrodynamische Strömung in Richtung der in Fig. 4 eingezeichnete Pfeile. Da sich die Druckräume 23, 24 in Strömungsrichtung verjüngen, wird in den Druckräumen 23, 24 ein Druck erzeugt, der dazu führt, dass der Ring 15 im Bereich dieser Druckräume kurzzeitig von der Welle abheben kann, so dass das abzudichtende Medium aus den Druckräumen 23, 24 den Ring 15 überströmt und zurück auf die Mediumsseite 19 strömen kann. Fig. 4a zeigt diese Rückförderung zurück zur Mediumsseite 19 im Bereich der Druckräume 23, 24, veranschaulicht durch den Strömungspfeil 38. Der Strömungspfeil 39 gibt die Verlustströmung zur Luftseite 13 an.

Aufgrund der Einwölbung 20 wird die Rückförderung des Mediums (Strömungspfeil 38) gar nicht oder wesentlich geringer umgelenkt als die Verlustströmung (Strömungspfeil 39). Im Vergleich zu herkömmlichen Radialwellendichtringen kann infolge der Einwölbung 20 die Verlustströmung 39 erheblich verringert werden. Das aus dem Mediumsraum 19 austretende Medium gelangt durch die Wellenrotation in die Druckräume 23, 24 und wird mittels der beschriebenen Rückfördereinrichtungen 28 zurück zur Mediumsseite 19 gefördert. Die hierbei eventuell auftretende Verlustströmung 39 wird gering gehalten, da die Rückförderung 38 des Mediums zur Mediumsseite 19 gar keine oder nur eine sehr geringe Strömungsänderung erfährt, die wesentlich geringer ist als bei der Verlustströmung 39.

Außerdem kann durch eine Verbreiterung des Bereiches 40 im Vergleich zum Bereich 41 (Fig. 4a) der typischen Anpresskraftverteilung von Manschettendichtungen entgegengewirkt werden. Dies hat zur Folge, dass die Verlustströmung 39 einen höheren Widerstand erfährt als die Rückförderung 38.

Die Verbreiterung 40 ist am Übergang von den Rückförderelementen 21, 22 in die Einwölbung 20 vorgesehen. Die Verbreiterung 41 befindet sich am Übergang zwischen dem Ring 15 und der Einwölbung 20. In Bezug auf diese beiden Verbreiterungen 40, 41 wird ausdrücklich auf Fig. 4a verwiesen, in der diese Verhältnisse schematisch dargestellt sind.

Der beschriebene Radialwellendichtring zeichnet sich dadurch aus, dass die Dichtlippe 11 am mediumsseitigen Rand mit dem umlaufenden Ring 15 versehen ist, der über den Umfang gleichmäßig verteilt die Abschnitte 20 aufweist. Sie bilden sogenannte Einzüge, die zur Luftseite 13 hinweisen. Die wechseldrallähnlichen Rückförderelemente in Form der Abschnitte 21, 22 sind zu den Einzügen 20 zentriert angeordnet. Die Abschnitte 20 münden etwa tangential in den Ring 15.

Der der Luftseite 13 zugewandte hintere Bereiche weist die Ringe 33 auf, die zur Sicherung der statischen Abdichtung dienen. An den ersten, dem mediumsseitigen Ring 15 zugewandten Ring 33 befinden sich die Leitrippen 29, die die Auswölbungen bilden, die über den Umfang verteilt angeordnet sind. Die Zahl dieser Auswölbungen 29 entspricht der Zahl der Einwölbungen 20. Die Einwölbungen 20 und die Auswölbungen 29 sind in Umfangsrichtung abwechselnd vorgesehen.

Die Auswölbungen 29 in Form der Leitrippen stellen sicher, dass das an einem der Rückförderelemente 21, 22 nicht zurückgeförderte Mediumvolumen in Form der Verlustströmung 39 aktiv zum benachbarten Rückförderelement geleitet wird. Durch diese zusätzliche aktive Zuführung des Mediumvolumens zu den Rückförderelementen wird die Rückförderung in den Medienraum gesteigert.

Der mediumsseitige Ring 15 mit den Einwölbungen 20 verringert die Störung der Strömungsrichtung des abzudichtenden Mediums. Aufgrund der Trägheit des Mediums wird somit die Verlustströmung verringert. Erreicht wird dies u.a. dadurch, dass der engste Spalt des durch die Druckräume 23, 24 gebildeten doppeltkonvergenten Spaltes, in Radialrichtung gesehen, auf der Mediumsseite 19 liegt.

Darüber hinaus wird die Kontaktfläche im Bereich der berechneten Verlustströmung vergrößert. Dadurch wird es einem eventuell vorhandenen Leckagemedium erschwert, sich über die Rückförderelemente hinweg in Richtung auf die Luftseite 13 bewegen zu können.

Die am ersten Ring 33 befindlichen Auswölbungen in Form der Leitrippen 29 führen eventuelle Verlustströmungen gezielt und aktiv wieder den Rückförderelementen 21, 22 zu.

Der Radialwellendichtring kann bei allen schnelldrehenden Anwendungen und wechselnden Drehrichtungen einer Welle eingesetzt werden. Die abzudichtende Welle kann hohe Drehzahlen sowie entsprechend hohe Umfangsgeschwindigkeiten aufweisen. Wechselnde Drehrichtungen zwischen der Mediumsseite 19 und der Luftseite 13 werden zuverlässig abgedichtet. Ein Hauptanwendungsgebiet kann beispielsweise in der E-Mobilität die Abdichtung einer Getriebeeingangswelle sein.

Die Radialwellendichtung kann abweichend vom dargestellten Ausführungsbeispiel auch so ausgebildet sein, dass sie beispielsweise in einen Dichtflansch integriert sein kann. In diesem Fall benötigt die Radialwellendichtung kein eigenes Gehäuse. So kann die Dichtlippe an den Dichtflansch beispielsweise angeklebt, anvulkanisiert oder in anderer geeigneter Weise an ihn gebunden sein.

## Patentansprüche

1. Radialwellendichtung (1) mit wenigstens einer Dichtlippe (11) aus elastomerem Material, die an ihrer der abzudichtenden Welle zugewandten Innenseite (14) einen ersten umlaufenden Ring (15), der dichtend an der Welle anliegt und gegen die Mediumsseite (19) abdichtet, über den Umfang der Dichtlippe (11) angeordnete Rückförderelemente (21,22), die an der der Luftseite (13) zugewandten Seite des ersten Ringes (15) vorgesehen sind und Leckagemedium unabhängig von der Drehrichtung der Welle zur Mediumsseite hin fördern, und wenigstens einen zweiten umlaufenden Ring (33) aufweist, der an der der Luftseite (13) zugewandten Seite der Rückförderelemente (21,22) vorgesehen ist,
**dadurch gekennzeichnet, dass** der erste umlaufende Ring (15) als Erhöhung ausgebildet ist und über seinen Umfang verteilt angeordnete, ebenfalls durch Erhöhungen gebildete Einwölbungen (20) aufweist, die sich in Richtung auf den zweiten Ring (33) erstrecken und etwa zwischen benachbarten Rückförderelementen (21, 22) liegen.

2. Radialwellendichtung nach Anspruch 1,
**dadurch gekennzeichnet, dass** die Einwölbungen (20) annähernd tangential an den ersten Ring (15) anschließen.

3. Radialwellendichtung nach Anspruch 1 oder 2,
**dadurch gekennzeichnet, dass** die vorteilhaft in sich gerade oder gekrümmt verlaufenden Rückförderelemente (21, 22) in Umfangsrichtung der Dichtlippe (11) schräg verlaufen.

4. Radialwellendichtung nach einem der Ansprüche 1 bis 3,
**dadurch gekennzeichnet, dass** in Umfangsrichtung der Dichtlippe (11) benachbarte Rückförderelemente (21, 22) entgegengesetzt schräg zueinander verlaufen.

5. Radialwellendichtung nach einem der Ansprüche 1 bis 4,
**dadurch gekennzeichnet, dass** die Rückförderelemente (21, 22) an den ersten Ring (15) anschließen, vorzugsweise einstückig mit ihm ausgebildet sind.

6. Radialwellendichtung nach einem der Ansprüche 1 bis 5,
**dadurch gekennzeichnet, dass** die Rückförderelemente (21, 22) und die Einwölbung (20) mit ihren Enden etwa auf gleicher Höhe an den ersten Ring (15) anschließen.

7. Radialwellendichtung nach einem der Ansprüche 1 bis 6,
**dadurch gekennzeichnet, dass** die Rückförderelemente (21, 22) mit dem benachbarten Bereich des ersten Ringes (15) einen spitzen Winkel einschließen.

8. Radialwellendichtung nach einem der Ansprüche 1 bis 7,
**dadurch gekennzeichnet, dass** die Rückförderelemente (21, 22) mit dem benachbarten Bereich des ersten Ringes (15) jeweils einen Druckraum (23, 24) begrenzen, und dass die Druckräume (23, 24) vorteilhaft so zueinander angeordnet sind, dass sie sich in Richtung zueinander verjüngen.

9. Radialwellendichtung nach einem der Ansprüche 1 bis 8,
**dadurch gekennzeichnet, dass** die Rückförderelemente (21, 22) Abstand vom zweiten Ring (33) haben.

10. Radialwellendichtung nach einem der Ansprüche 1 bis 9,
**dadurch gekennzeichnet, dass** die Rückförderelemente (21, 22) gleiche Länge haben oder unterschiedlich lang sind.

11. Radialwellendichtung nach einem der Ansprüche 1 bis 10,
**dadurch gekennzeichnet, dass** an der Dichtlippe (11) mehrere, vorteilhaft gleich ausgebildete zweite Ringe (33) vorgesehen sind, die koaxial zueinander und zum ersten Ring (15) liegen.

12. Radialwellendichtung nach einem der Ansprüche 1 bis 11,
**dadurch gekennzeichnet, dass** die zweiten Ringe (33) im Axialschnitt eine gekrümmte Außenseite aufweisen und vorteilhaft mit gleichem Abstand hintereinander angeordnet sind.

13. Radialwellendichtung nach einem der Ansprüche 1 bis 12,
**dadurch gekennzeichnet, dass** der dem ersten Ring (15) benachbarte zweite Ring (33) über seinen Umfang verteilt angeordnete Auswölbungen (29) aufweist, die sich in Richtung auf den ersten Ring (15) erstrecken.

14. Radialwellendichtung nach Anspruch 13,
**dadurch gekennzeichnet, dass** die Auswölbungen (29) und die Einwölbungen (20) in Umfangsrichtung der Dichtlippe (11) abwechselnd angeordnet sind.

15. Radialwellendichtring nach Anspruch 14,
**dadurch gekennzeichnet, dass** die freien Enden der Rückförderelemente (21, 22) geringen Abstand von den Auswölbungen (29) haben.

## Claims

1. A radial shaft seal (1) with at least one sealing lip (11) made of elastomer material, which comprises at its inner side (14) facing the shaft to be sealed a first circumferential ring (15), which lies in a sealing manner against the shaft and seals against the medium side (19), return elements (21, 22) arranged over the circumference of the sealing lip (11), which are provided at the side of the first ring (15) facing the air side (13) and convey leakage medium to the medium side irrespective of the direction of rotation of the shaft, and at least one second circumferential ring (33), which is provided at the side of the return elements (21, 22) facing the air side (13), **characterised in that** the first circumferential ring (15) is constituted as an elevation and comprises cavities (20) which are also formed by elevations and arranged distributed over its circumference and which extend in the direction of the second ring (33) and lie approximatly between adjacent return elements (21, 22).

2. Radial shaft seal according to claim 1, **characterised in that** the cavities (20) adjoin the first ring (15) approximately tangentially.

3. Radial shaft seal according to claim 1 or 2, **characterised in that** the return elements (21, 22), which in themselves advantageously run straight or curved, run obliquely in the circumferential direction of the sealing lip (11).

4. Radial shaft seal according to any one of claims 1 to 3, **characterised in that** return elements (21, 22) adjacent to the sealing lip (11) in the circumferential direction run oppositely skewed to one another.

5. Radial shaft seal according to any one of claims 1 to 4, **characterised in that** the return elements (21, 22) adjoin the first ring (15), preferably are constituted in one piece with it.

6. Radial shaft seal according to any one of claims 1 to 5, **characterised in that** the return elements (21, 22) and the concavity (20) adjoin the first ring (15) with their ends approximately at the same height.

7. Radial shaft seal according to any one of claims 1 to 6, **characterised in that** the return elements (21, 22) enclose an acute angle with the adjacent region of the first ring (15).

8. Radial shaft seal according to any one of claims 1 to 7, **characterised in that** the return elements (21, 22) together with the adjacent region of the first ring (15) each define a pressure chamber (23, 24), and that the pressure chambers (23, 24) are advantageously arranged with respect to one another such that they taper in the direction towards one another.

9. Radial shaft seal according to any one of claims 1 to 8, **characterised in that** the return elements (21, 22) have a distance from the second ring (33).

10. Radial shaft seal according to any one of claims 1 to 9, **characterised in that** the return elements (21, 22) have the same length or have a different length.

11. Radial shaft seal according to any one of claims 1 to 10, **characterised in that** a plurality of, advantageously identically constituted, second rings (33) are provided at the sealing lip (11), which second rings lie coaxially to one another and to the first ring (15).

12. Radial shaft seal according to any one of claims 1 to 11, **characterised in that** the second rings (33) have a curved outer side in the axial section and are arranged advantageously with the same distance behind one another.

13. Radial shaft seal according to any one of claims 1 to 12, **characterised in that** the second ring (33) adjacent to the first ring (15) comprises bulges (29) arranged distributed over its circumference, which extend in the direction toward the first ring (15).

14. Radial shaft seal according to claim 13, **characterised in that** the bulges (29) and the concavities (20) are arranged alternately in the circumferential direction of the sealing ring (11).

15. Radial shaft seal according to claim 14, **characterised in that** the free ends of the return elements (21, 22) have a small spacing from the bulges (29).

## Revendications

1. Joint d'arbre radial (1) pourvu d'au moins une lèvre d'étanchéité (11) en une matière élastomère, qui sur sa face interne (14) dirigée vers l'arbre dont il faut assurer l'étanchéité comporte une première bague (15) périphérique qui s'appuie de manière étanche sur l'arbre et en assure l'étanchéité par rapport au côté fluide (19), des éléments de refoulement (21, 22) placés sur la périphérie de la lèvre d'étanchéité (11), qui sont prévus sur la face de la première bague (15) qui est dirigée vers le côté air (13) et qui transportent du fluide de fuite vers le côté fluide, indépendamment du sens de rotation de l'arbre et au moins une deuxième bague (33) périphérique, qui est prévue sur la face des éléments de refoulement (21, 22) qui est dirigée vers le côté air (13),
**caractérisé en ce que** la première bague (15) périphérique est conçue sous la forme d'une élévation et comporte des concavités (20) placées en distribution sur sa périphérie, également créées par des élévations, qui s'étendent dans la direction de la deuxième bague (33) et qui se situent approximativement entre des éléments de refoulement (21, 22) voisins.

2. Joint d'arbre radial selon la revendication 1,
**caractérisé en ce que** les concavités (20) se raccordent de manière pratiquement tangentielle sur la première bague (15).

3. Joint d'arbre radial selon la revendication 1 ou 2,
**caractérisé en ce que** les éléments de refoulement (21, 22) s'écoulant avantageusement de manière rectiligne ou curviligne en soi s'écoulent en oblique dans la direction périphérique de la lèvre d'étanchéité (11).

4. Joint d'arbre radial selon l'une quelconque des revendications 1 à 3,
**caractérisé en ce que** des éléments de refoulement (21, 22) voisins dans la direction périphérique de la lèvre d'étanchéité (11) s'écoulent en oblique opposée l'un par rapport à l'autre.

5. Joint d'arbre radial selon l'une quelconque des revendications 1 à 4,
**caractérisé en ce que** les éléments de refoulement (21, 22) se raccordent sur la première bague (15), sont conçus de préférence en monobloc avec cette dernière.

6. Joint d'arbre radial selon l'une quelconque des revendications 1 à 5,
**caractérisé en ce que** les éléments de refoulement (21, 22) et la concavité (20) se raccordent par leurs extrémités approximativement à la même hauteur sur la première bague (15).

7. Joint d'arbre radial selon l'une quelconque des revendications 1 à 6,
**caractérisé en ce que** les éléments de refoulement (21, 22) incluent avec la zone voisine de la première bague (15) un angle aigu.

8. Joint d'arbre radial selon l'une quelconque des revendications 1 à 7,
**caractérisé en ce que** les éléments de refoulement (21, 22) délimitent avec la zone voisine de la première bague (15) respectivement un espace de pression (23, 24) et **en ce que** les espaces de pression (23, 24) sont placés de préférence les uns par rapport aux autres de sorte à s'effiler, en direction les uns vers les autres.

9. Joint d'arbre radial selon l'une quelconque des revendications 1 à 8,
**caractérisé en ce que** les éléments de refoulement (21, 22) présentent un écart par rapport à la deuxième bague (33) .

10. Joint d'arbre radial selon l'une quelconque des revendications 1 à 9,
**caractérisé en ce que** les éléments de refoulement (21, 22) sont de même longueur ou de longueur différente.

11. Joint d'arbre radial selon l'une quelconque des revendications 1 à 10,
**caractérisé en ce que** sur la lèvre d'étanchéité (11) sont prévues plusieurs deuxièmes bagues (33), avantageusement conçues de manière identique, qui se situent de manière coaxiale les unes par rapport aux autres et par rapport à la première bague (15).

12. Joint d'arbre radial selon l'une quelconque des revendications 1 à 11,
**caractérisé en ce que** les deuxièmes bagues (33) comportent en coupe axiale une face extérieure curviligne et sont placées avantageusement avec un même écart les unes derrière les autres.

13. Joint d'arbre radial selon l'une quelconque des revendications 1 à 12,
**caractérisé en ce que** la deuxième bague (33) voisine de la première bague (15) comporte des convexités (29) placées en distribution sur sa périphérie, qui s'étendent dans la direction de la première bague (15).

14. Joint d'arbre radial selon la revendication 13,
**caractérisé en ce que** les convexités (29) et les concavités (20) sont placées en alternance dans la direction périphérique de la lèvre d'étanchéité (11).

15. Joint d'arbre radial selon la revendication 14,
**caractérisé en ce que** les extrémités libres des éléments de refoulement (21, 22) présentent un faible écart par rapport aux convexités (29).
